# EUROPEAN PATENT SPECIFICATION

(11) **EP 1 354 478 B1**
(45) Date of publication and mention of the grant of the patent: **19.05.2004**
(21) Application number: 02708284.1
(22) Date of filing: 15.01.2002
(51) Int. Cl.: H04N 7/24, H04N 7/173, G06F 17/30

(54) **METHOD FOR CHOOSING A REFERENCE INFORMATION ITEM IN A TELEVISION SIGNAL**
VERFAHREN FÜR INTERNET-ZUGANG DURCH FERNSEHBILD -OBJECT AUSWAHL
PROCEDE PERMETTANT DE CHOISIR UN ELEMENT D'INFORMATION DE REFERENCE DANS UN SIGNAL DE TELEVISION

(30) Priority: 22.01.2001 DE 10102485
(43) Date of publication of application: 22.10.2003
(73) Proprietor: Thomson Licensing S.A., 92100 Boulogne-Billancourt (FR)
(72) Inventor: ADOLPH, Dirk, 30952 Ronnenberg (DE); SCHEWZOW, Andrej, 30163 Hannover (DE); DREXLER, Michael, 30989 Gehrden (DE); KOCHALE, Axel, 31832 Springe (DE)
(74) Representative: Rittner, Karsten, Dr.
(86) International application number: PCT/EP2002/000315
(87) International publication number: WO 2002/058399

(56) References cited:
- EP-A- 0 840 241
- WO-A-98/47084
- US-A- 5 708 845
- US-A- 5 774 664
- US-A- 5 774 666
- DAKSS J ET AL: "HYPERLINKED VIDEO" PROCEEDINGS OF THE SPIE, SPIE, BELLINGHAM, VA, US, vol. 3528, November 1999 (1999-11), pages 2-10, XP000986761

## Description

The invention relates to a method for choosing a reference information item in a television signal, which can be employed in particular for calling up an Internet and/or email address with a television set.

### Prior art

An essential constituent in the configuration of Internet pages is the use of references, so-called hyperlinks or links for short. These hyperlinks specify a unique address of a document or a file in the form Internet service://Computername/Directoryname/Name.Type#Location in the object.

The graphical representation of the hyperlinks on the screen is often effected as underlined text or by means of pictures linked to the hyperlinks, such pictures being known as icons. A hyperlink is then usually selected and chosen by clicking on the text or the icon with the aid of a computer mouse. As a result of the clicking, by way of example, another Internet page is then called up and loaded into the browser.

Increasingly, Internet or email addresses are also being indicated in television transmissions and on teletext pages. Furthermore, interactive TV sets, also known as web-TV, enable access to the Internet including the reception and the sending of emails, adaptations being necessary owing to the technical differences between current TV sets and PCs.

Thus, WO-A-9749044 discloses an interface for a web browser in order to be able to display Internet pages on a TV screen. In this case, links on Internet pages are recognized by the interface and identified by an assigned recognition character on the screen. For this purpose, it is possible to use different colours or numbers which enable a link to be chosen without clicking on the link. In this way, it is possible to dispense with the use of a computer mouse and effect a link for example using the TV remote control. This has the advantage that a single control unit can be used to perform both surfing and control of the device, the said control unit furthermore being known to persons who are not used to using a computer mouse, such as older persons, for instance.

DE-A-198 11 103 discloses finding an Internet or email address which is transmitted in the teletext data stream and forwarding this information directly to an Internet browser without having to write the address down and enter it into the Internet browser. The starting point in this case is not an Internet page with embedded links but an operating mode of a television receiver in which teletext data are displayed. In this case, links such as, for instance, HTML links for Internet pages are not embedded in these teletext pages. Rather, the alphanumeric characters which are displayed on the teletext page are analyzed either by the user or a suitable apparatus to determine whether they correspond to an Internet or email address. In particular, the addresses can also be generated by fragments which are displayed on the teletext page.

Furthermore, US-A-5818935 discloses transmitting a table with so-called Internet information pointers together with the video signal. This table can be called up by the user and is then displayed in a manner superposed on the video signal. The user can select one of the addresses displayed, which address is thereupon fed to the Internet browser. In this case, a suitable encoder inserts the Internet information pointers into a specific teletext page at the transmitter end for transmission. If the user wishes to call up an Internet page with information items with respect to the video signal considered, he must first press a button on the remote control in order that the selection table is displayed, in order then, according to the superposed representation, to select an address, for example by inputting an assigned number.

### Invention

The invention is based on the object of specifying a method for choosing a reference information item in a television signal which enables, in a compatible manner, a simple and intuitive control without disturbing insertions. This object is achieved by means of the method specified in Claim 1.

In principle, the method according to the invention consists in the fact that in a television signal which comprises, in addition to the video signal, a supplementary signal for the reference information item, the reference information item is assigned to a sub-area of the picture content of the video signal and the reference information item is chosen by selecting the assigned sub-area, thereby enabling a reproduction of assigned information.

Further advantageous refinements of the invention emerge from the claims, the rest of the description and the drawings, which show exemplary embodiments of the invention.

### Drawings

Exemplary embodiments of the invention are described with reference to the drawings, in which:
- Figure 1: shows the assignment of hyperlinks for different sub-areas of a television signal;
- Figure 2: shows an encoder with insertion of contour information items into the user_data of an MPEG signal;
- Figure 3: shows an encoder with insertion of contour information items into the blanking interval of an analogue television signal;
- Figure 4: shows a decoder with evaluation of contour information items in the user_data of an MPEG signal;
- Figure 5: shows a decoder with evaluation of contour information items in the blanking interval of an analogue television signal.

### Exemplary embodiments

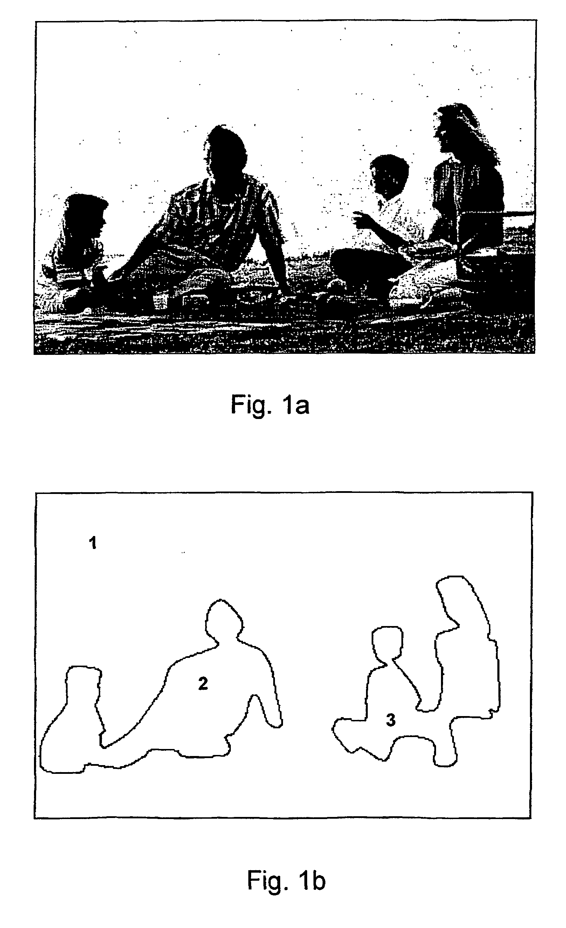

Figure 1 elucidates the assignment of hyperlinks for different sub-areas of a television signal. Figure 1a uses an example to show the picture content of a television signal, the reproduction being able to be effected in any desired manner, for instance on a screen. The reproduced screen shows a family taking a picnic on the beach. In this case, the screen representation has no disturbing visually perceptible hyperlinks whatsoever in the form of underlined text or icons.

Nevertheless, a first hyperlink is assigned to the persons and a second hyperlink is assigned to the background. In this case, as illustrated in Figure 1b, the contours of the persons serve as delimiting criterion between the hyperlinks assigned to the different sub-areas of the picture signal. In this case, the first hyperlink is called up if a sub-area is selected which lies in the contours 2, 3 of the persons and, by way of example, can lead the user to the home page of a clothing department store. By contrast, if the background 1 is selected, the second hyperlink is called up, which leads for example to the home page of a travel agency. Equally, more detailed information can be directly output for the selected area, in the abovementioned example for instance concerning the holiday region, the price of the articles of clothing represented, or the film names of the persons or the names of the actors playing them. The information can be requested from the Internet in response to the selection by the user or, alternatively, can concomitantly be transmitted from the outset with the video signal.

These more detailed items of information can be reproduced in particular visually on the screen, whether in a manner filling the screen or else in the form of an insertion or superposition. Equally, however, primarily in the case of shorter items of information, it is also possible to effect acoustic reproduction with the aid of a voice synthesiser.

Equally, when a sub-area is selected, an email editor can be opened, the recipient address being made available automatically.

Finally, it is also possible, instead of a reproduction of further items of information, merely to transmit the selection of an object by the user to the broadcasting corporation. This allows the user, by way of example, to take part in a convenient manner in a viewers poll, known in particular as a TED poll in Germany.

The delimitation of the sub-areas and thus the assignment of the two different hyperlinks in Figure 1 to the persons, on the one hand, and the background, on the other hand, is effected by the contours of the persons being transmitted together with the hyperlinks and the television signal. The hyperlink assigned to the persons can then be selected for example by clicking on a person.

The simplest procedure, but one which is also almost always the least accurate, is to approximate the sub-areas by means of a circle, an ellipse or a polygon. This has the advantage that only very few parameters are required and have to be transmitted - for instance, in the case of a circle, only the centre of the circle and the diameter or radius. The accuracy is sufficient in many cases, since the user will generally tend to click approximately centrally on the object which is to be clicked on.

The contours of the objects to be selected can be approximated more accurately in the majority of cases if the contour is subdivided into a plurality of sub-sections which are approximated separately. Various functions for approximation, such as polynomials and spline functions, are known for this from mathematics. In this case, the quality of the approximation depends on the complexity implemented.

A linear fit, also referred to as "linear regression" or "1st-degree polynomial regression", can be chosen as the simplest approximation function. In this case, an attempt is made to plot a straight line as optimally as possible through a plurality of points. The accuracy can be improved by means of higher-degree polynomial regressions. However, many more complex contours can no longer be suitably described using polynomials. In this case, non-linear fits are used, such as the spline approximation for example.

Equally, it is possible to select a suitable approximation depending on the contour of the sub-area - by way of example, by approximating a plurality of sub-sections of the contour by means of approximation functions for a motor vehicle, and in contrast by means of a circle for a tyre.

Finally, instead of an approximation of the contour, the screen contents can also be divided in a raster-type manner into blocks, an information item regarding the blocks in which an object to be selected is represented being transmitted. In the case of digital video signals in which, as in the case of MPEG II video signals, for the coding, the video signal has been subdivided into macroblocks and blocks, an object to be selected can, in particular, also be assigned thereto.

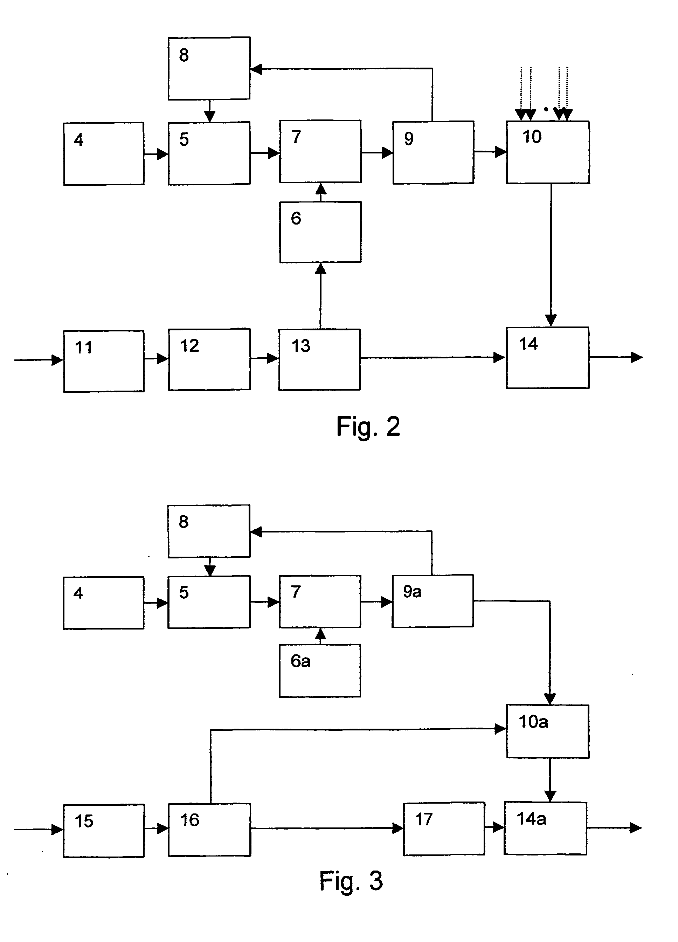

Figure 2 shows an encoder for inserting contour information items into a digital television signal.

By way of example, the MPEG II video standard, as specified in ISO/IEC13818-2, can be used for the transmission or recording and reproduction of digital television signals. The specification provides data areas which can be utilized for specific applications by the user in different layers of the total of six layers, which are designated as sequence layer, GOP (Group Of Pictures) layer, picture layer, slice layer, macroblock layer and block layer. According to the invention, these so-called user_data can be used for the transmission of contour information items and the associated hyperlinks.

For the objects provided with a hyperlink in a frame, contour information items are stored in a memory 4. The contour information items are fed to a converter 5, which uses them to perform an approximation with the aid of Bezier or B splines. The maximum number of control points for the respective splines is in this case limited by a limiting unit 8 depending on various parameters such as the number of objects provided with hyperlinks or the size of the data areas available through the user_data. The data to be transmitted can be reduced by a compression unit 7, which determines a change in the control points, for example as a result of a movement of the object, and encodes only the resultant difference values. A synchronization unit 6 in this case ensures synchronization of the encoding process, for example encoding based only on the so-called I frames. A further encoder unit 9 then matches the compressed spline data to the format of the user_data of the MPEG video signal. The spline data are then inserted together with the address information items of the respective hyperlinks and, if appropriate, further data into the user_data, preferably into the extensions_and_user_data of the picture layer, by a further unit 10.

The spline data can in this case be identified as such, so that use by correspondingly equipped receiving and/or reproduction devices can be effected and, on the other hand, the spline data are disregarded in the case of a conventional receiving and/or reproduction device, backward compatibility thereby being ensured.

Finally, the user_data of the picture layer are then added to the MPEG video signal for transmission or recording by means of a multiplexing unit 14, the said signal, after conversion from an analogue into a digital television signal by an A/D converter 11 and subsequent buffer-storage in a video memory 12, having been coded by an MPEG video encoder 13.

Figure 3 shows an encoder for inserting contour information items into the blanking interval of an analogue television signal.

In analogue television systems such as PAL, NTSC or SECAM, no video signals are transmitted in the so-called vertical blanking interval, also called VBI for short. However, this region is utilized for the simultaneous transmission of digital data. Thus, the so-called VPS data are transmitted in the VBI in order to simplify control of the recording mode of a video recorder.

Equally, so-called WSS bits are communicated, which contain an information item regarding the format of the video signal represented. Furthermore, what is known as teletext is utilized in order, in addition to the television programme offered, to reproduce current news, weather reports, sports information, etc. by means of characters and graphics on the screen.

According to the invention, the VBI, in particular in the region of the teletext signal, that is to say, in Germany, lines 11 to 15, 20, 21 in the first field and lines 323 to 328, 333 and 334 in the second field, can be utilized in order to enable transmission of contour information items and the associated hyperlinks. An encoder suitable for this largely corresponds to the encoder from Figure 2 and is illustrated in Figure 3. The units 4, 5, 7 and 8 are identical, synchronization unit 6a now ensures encoding based on every n-th field or frame, encoder unit 9a now matches the compressed spline data to the teletext format and unit 10a now inserts them into the teletext data. The unit 15 supplies an analogue television signal which already contains teletext data or other VBI data. Video signal and data are then separated from one another in a further unit 16. The content of the VBI lines is then fed to the unit 10a for insertion of the contour information items and the video signal is buffer-stored in a memory 17. The completed teletext signal and the buffer-stored video signal are then combined again to form a complete television signal for transmission or recording by means of a multiplexing unit 14a.

The units in Figures 2 and 3 may be partly or completely combined or implemented using software.

At the reproduction end, corresponding decoders can be used in order to separate the video signal again from the contour information items and address information items.

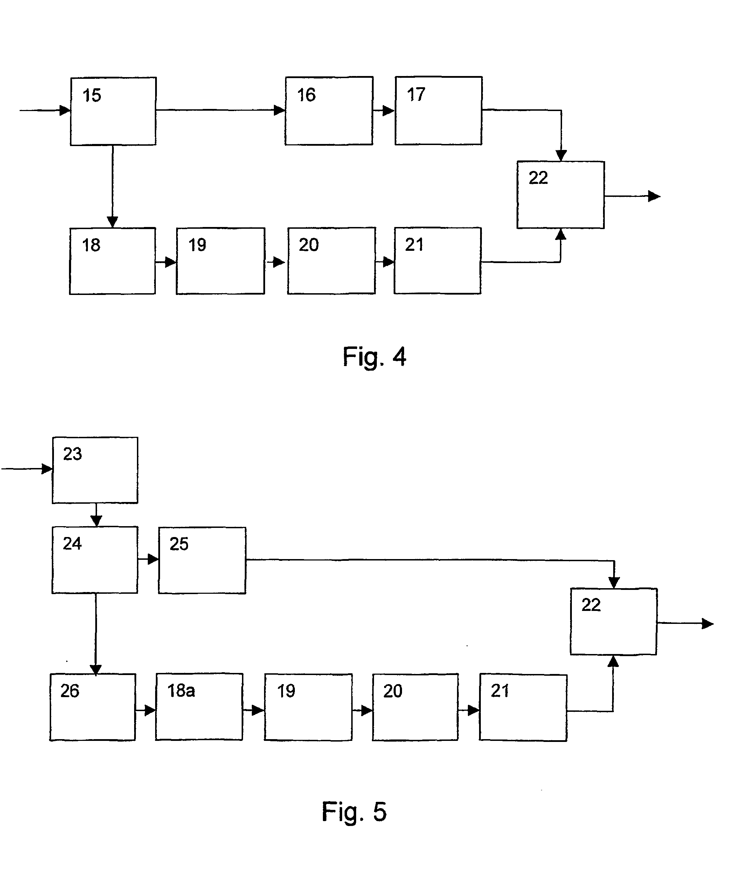

Figure 4 shows a decoder for evaluating contour information items in a digital television signal. Firstly, MPEG signals that are received or are reproduced by a reproduction device are fed to a demultiplexer 15, which separates the user_data of the picture layer from the MPEG-encoded video signal. The video data are then decoded in an MPEG video decoder 16 and buffer-stored in a video buffer 17. In a conversion unit 18, the compressed spline signals are regenerated from the user_data and fed to a decoder unit 19, which determines from the compressed spline signals the support points for the representation of the hyperlink contours. From these, a conversion unit 20 determines the actual contours on the basis of Bezier or B splines. The different contour information items for the hyperlinks concealed in a field or frame are then buffer-stored in the buffer unit 21 and are then superposed preferably invisibly with the video signal by the superposition unit 22.

Figure 5 shows a decoder for evaluating contour information items which have been transmitted in the blanking interval of an analogue television signal. As at the encoder end, the decoders also largely correspond, in particular the units 19 to 22 are identical. The unit 23 supplies the analogue television signal with teletext data or other VBI data which contain the contour and address information items. Video signal and data are then separated from one another in the unit 24. The video signal is then buffer-stored in the buffer memory 25, while the content of the VBI lines is fed to the unit 26 for detection and separation of the contour information items.

A hyperlink can be chosen in particular by the detection of a cursor position and also of a selection command which can be given in particular by pressing a button. The cursor can be moved over the screen for example by means of arrow keys on a remote control or a computer mouse.

The ease of operation can be increased further in various ways. Thus, the contours of an object which is provided with a concealed hyperlink can be emphasised in colour when the cursor is guided over the object. Equally, by means of corresponding inputting by the user, the video signal with the current hyperlink can be buffer-stored. This is of interest particularly in the case of rapidly changeable screen contents, since it enables the user to make a selection and choose a hyperlink unhurriedly.

The invention can be implemented in a wide variety of devices appertaining to consumer electronics, such as e.g. TV sets, set-top boxes, video recorders, DVD players, satellite receivers, TV-video combinations.

## Claims

1. Method for the transmission or recording of a video signal with embedded hyperlinks, wherein the hyperlinks enable a reproduction of assigned information and/or execution of assigned actions, and wherein the hyperlinks are assigned to a sub-area of the picture content of the displayed video signal and can be activated by selecting the assigned sub-area, and wherein hyperlink information regarding the information to be reproduced and/or the action to be executed and contour information representing an approximation of the contour of the sub-area is transmitted or recorded, **characterized in that** the video signal is transmitted or recorded as a digital television signal in accordance with an MPEG video standard with the hyperlink information and contour information being inserted into a user_data area of the picture layer.

2. Method according to Claim 1, **characterized in that** the contour information contains parameters for approximation functions such as polynomials or spline functions.

3. Method for the reproduction of a video signal with embedded hyperlinks, wherein the hyperlinks enable a reproduction of assigned information and/or execution of assigned actions, and wherein the hyperlinks are assigned to a sub-area of the picture content of the displayed video signal and can be activated by selecting the assigned sub-area, and wherein hyperlink information regarding the information to be reproduced and/or the action to be executed and contour information representing an approximation of the contour of the sub-area is received, **characterized in that** the video signal is received as a digital television signal in accordance with an MPEG video standard with the hyperlink information and contour information being separated from a user_data area of the picture layer.

4. Method according to Claim 3, **characterized in that** the hyperlink information represents a hyperlink to an Internet or email address, which is forwarded to an Internet browser when being selected.

5. Method according to Claim 3 or 4, **characterized in that** the hyperlink information is activated by selecting the assigned sub-area using a cursor which is moved over the screen for example using a computer mouse.

6. Apparatus adapted for carrying out the method according to one of the preceding claims, including means adapted to perform the steps of claim 1 or 3.

7. Information carrier for a video signal with embedded hyperlinks, wherein the hyperlinks enable a reproduction of assigned information and/or execution of assigned actions, and wherein the hyperlinks are assigned to a sub-area of the picture content of the displayed video signal and can be activated by selecting the assigned sub-area, and wherein hyperlink information regarding the information to be reproduced and/or the action to be executed and contour information representing an approximation of the contour of the sub-area is transmitted or recorded, **characterized in that** the video signal is recorded as a digital television signal in accordance with an MPEG video standard with the hyperlink information and contour information being inserted into a user_data area of the picture layer.

## Patentansprüche

1. Verfahren zur Übertragung oder Aufnahme eines Videosignals mit eingebetteten Hyperlinks, wobei die Hyperlinks eine Wiedergabe von zugeordneter Information und/oder Ausführung von zugeordneten Aktionen ermöglichen, und wobei die Hyperlinks einem Teilbereich des Bildinhaltes des dargestellten Videosignals zugeordnet sind und durch Auswahl des zugeordneten Teilbereiches aktiviert werden können, und wobei Hyperlinkinformationen bezüglich der wiederzugebenden Information und/oder der auszuführenden Aktion und der Umrissinformationen, die eine Approximation des Aussenumrisses des Teilbereiches darstellen, übertragen oder aufgenommen werden, **dadurch gekennzeichnet, dass** das Videosignal als ein digitales Fernsehsignal gemäß einem MPEG-Video-Standard übertagen oder aufgenommen wird, wobei die Hyperlinkinformationen und die Umrissinformationen in den user_data-Bereich des picture layers eingefügt werden.

2. Verfahren nach Anspruch 1, **dadurch gekennzeichnet, dass** die Umrissinformationen Parameter für Approximationsfunktionen wie Polynome oder Spline-Funktionen enthalten.

3. Verfahren zur Wiedergabe eines Videosignals mit eingebetteten Hyperlinks, wobei die Hyperlinks eine Wiedergabe von zugeordneter Information und/oder Ausführung von zugeordneten Aktionen ermöglichen, und wobei die Hyperlinks einem Teilbereich des Bildinhaltes des dargestellten Videosignals zugeordnet sind und durch Auswahl des zugeordneten Teilbereiches aktiviert werden können, und wobei Hyperlinkinformationen bezüglich der wiederzugebenden Information und/oder der auszuführenden Aktion und der Umrissinformationen, die eine Approximation des Aussenumrisses des Teilbereiches darstellen, empfangen werden, **dadurch gekennzeichnet, dass** das Videosignal als ein digitales Fernsehsignal gemäß einem MPEG-Video-Standard empfangen wird, wobei die Hyperlinkinformationen und die Umrissinformationen von dem user_data-Bereich des picture layers abgetrennt werden.

4. Verfahren nach Anspruch 3, **dadurch gekennzeichnet, dass** die Hyperlinkinformation einen Hyperlink zu einer Internet- oder email-Adresse darstellt, der bei Anwahl an einen Internetbrowser weitergegeben wird.

5. Verfahren nach Anspruch 3 oder 4, **dadurch gekennzeichnet, dass** die Hyperlinkinformation durch Auswahl des zugeordneten Teilbereiches mittels eines Cursors aktiviert wird, welcher beispielsweise unter Verwendung einer Computermaus über den Bildschirm bewegt wird.

6. Vorrichtung, die zur Durchführung des Verfahrens nach einem der vorhergehenden Ansprüche eingerichtet ist, und die angepasste Mittel zur Ausführung der Schritte der Ansprüche 1 oder 3 enthält.

7. Informationsträger für ein Videosignal mit eingebetteten Hyperlinks, wobei die Hyperlinks eine Wiedergabe von zugeordneter Information und/oder Ausführung von zugeordneten Aktionen ermöglichen, und wobei die Hyperlinks einem Teilbereich des Bildinhaltes des dargestellten Videosignals zugeordnet sind und durch Auswahl des zugeordneten Teilbereiches aktiviert werden können, und wobei Hyperlinkinformationen bezüglich der wiederzugebenden Information und/oder der auszuführenden Aktion und der Umrissinformationen, die eine Approximation des Aussenumrisses des Teilbereiches darstellen, übertragen oder aufgenommen sind, **dadurch gekennzeichnet, dass** das Videosignal als ein digitales Fernsehsignal gemäß einem MPEG-Video-Standard aufgenommen ist, wobei die Hyperlinkinformationen und die Umrissinformationen in den user_data-Bereich des picture layers eingefügt sind.

## Revendications

1. Procédé pour la transmission ou l'enregistrement d'un signal vidéo avec des hyperliens intégrés, dans lequel les hyperliens permettent une reproduction d'informations affectées et/ou l'exécution d'actions affectées et dans lequel les hyperliens sont affectés à une sous-zone du contenu d'image du signal vidéo affiché et peuvent être activés via la sélection de la sous-zone affectée et dans lequel les informations d'hyperlien concernant les informations à reproduire et/ou l'action à exécuter et les informations de contour représentant une approximation du contour de la sous-zone sont transmises ou enregistrées, **caractérisé en ce que** le signal vidéo est transmis ou enregistré en tant que signal de télévision numérique conformément à une norme vidéo MPEG avec les informations d'hyperlien et les informations de contour insérées dans une zone de données utilisateur de la couche d'image.

2. Procédé selon la revendication 1, **caractérisé en ce que** les informations de contour contiennent des paramètres pour les fonctions d'approximation telles que les fonctions polynomiales ou splines.

3. Procédé pour la reproduction d'un signal vidéo avec des hyperliens intégrés, dans lequel les hyperliens permettent une reproduction d'informations affectées et/ou l'exécution d'actions affectées et dans lequel les hyperliens sont affectés à une sous-zone du contenu d'image du signal vidéo affiché et peuvent être activés via la sélection de la sous-zone affectée et dans lequel les informations d'hyperlien concernant les informations à reproduire et/ou l'action à exécuter et les informations de contour représentant une approximation du contour de la sous-zone sont reçues, **caractérisé en ce que** le signal vidéo est reçu en tant que signal de télévision numérique conformément à une norme vidéo MPEG avec les informations d'hyperlien et les informations de contour séparées d'une zone de données utilisateur de la couche d'image.

4. Procédé selon la revendication 3, **caractérisé en ce que** les informations d'hyperlien représentent un hyperlien vers une adresse Internet ou de messagerie électronique qui est transmis à un navigateur Internet lorsqu'il est sélectionné.

5. Procédé selon la revendication 3 ou 4, **caractérisé en ce que** les informations d'hyperlien sont activées via la sélection de la sous-zone affectée au moyen d'un curseur déplacé à l'écran, par exemple à l'aide d'une souris d'ordinateur.

6. Appareil adapté pour mettre en oeuvre le procédé selon l'une des revendications précédentes, incluant des dispositifs adaptés pour exécuter les étapes de la revendication 1 ou 3.

7. Porteuse d'informations pour un signal vidéo avec des hyperliens intégrés, dans laquelle les hyperliens permettent une reproduction d'informations affectées et/ou l'exécution d'actions affectées et dans laquelle les hyperliens sont affectés à une sous-zone du contenu d'image du signal vidéo affiché et peuvent être activés via la sélection de la sous-zone affectée, et dans laquelle les informations d'hyperlien concernant les informations à reproduire et/ou l'action à exécuter et les informations de contour représentant une approximation du contour de la sous-zone sont transmises ou enregistrées, **caractérisée en ce que** le signal vidéo est enregistré en tant que signal de télévision numérique conformément à une norme vidéo MPEG avec les informations d'hyperlien et les informations de contour insérées dans une zone de données utilisateur de la couche d'image.
